# EUROPEAN PATENT SPECIFICATION

(11) **EP 4 395 562 B1**
(45) Date of publication and mention of the grant of the patent: **07.10.2026**
(21) Application number: 22762197.6
(22) Date of filing: 09.08.2022
(51) Int. Cl.: A23L 5/10, A23L 19/10, A23L 19/12, A23L 19/18

(54) **METHOD FOR CO-FRYING VEGETABLE AND TUBER SUBSTRATES**
VERFAHREN ZUM GEMEINSAMEN FRITTIEREN VON GEMÜSE- UND KNOLLENSUBSTRATEN
PROCÉDÉ DE CO-FRITURE DE SUBSTRATS DE LÉGUMES ET DE TUBERCULES

(30) Priority: 03.09.2021 US 202117466272
(43) Date of publication of application: 10.07.2024
(73) Proprietor: Frito-Lay North America, Inc., Plano, TX 75024-4099 (US)
(72) Inventor: BHASKAR, Ajay Rajeshwar, Plano, Texas 75024 (US); AMOAKO, Derrick Brian, Plano, Texas 75024 (US)
(74) Representative: McNamara, Kathryn
(86) International application number: PCT/US2022/039843
(87) International publication number: WO 2023/033999

(56) References cited:
- US-A1- 2015 189 903
- US-A1- 2018 368 451
- KINGSLEY K.: "Homemade Vegetable Chips Recipe", THE SPRUCE EATS, 14 July 2021 (2021-07-14), pages 1 - 2, XP055971645, Retrieved from the Internet <URL:https://www.thespruceeats.com/homemade-vegetable-chips-102105> [retrieved on 20221016]

## Description

A method to fry two or more of a tuber or vegetable substrates together in the same fryer at the same time is described. The frying may be a continuous or a batch process. The described process produces high quality snack blends while eliminating product loss, breakage and process inefficiencies associated with conventional post-fry blending/mixing.

### BACKGROUND

Increasingly, consumers seek snack products that provide a variety of tastes and textures. As an example, there exists in the marketplace a single package having a mixture of fried vegetable snack chips, which in some cases includes potatoes (e.g., white, sweet, blue). Typically, such mixtures are made by combining the relevant substrates (and forms) after frying. This post-frying blending/mixing process requires transfer logistics for totting and mixing which can be expensive, inefficient, and typically results in significant product loss and breakage with a loss in product quality and process efficiency.

It would be desirable to achieve a mixture of vegetables or a mixture of tuber and vegetable substrates in a single package while avoiding the problems of post-frying blending. A challenge with attempting to fry different substrates together in a single continuous or batch process (i.e., co-fried) is that the substrates have a different solids content and a different sugar content. As a result, optimal conditions for one substrate may likely be sub-optimal conditions for the other substrates sought to be co-fried.

Kingsley, K (https://www.thespruceeats.com/homemade-vegetable-chips-102105; XP055971645 (14 July 2021), pages 1-2) discloses a method for preparing vegetable and tuber chips involving soaking slices of both the raw tuber and vegetable substrates together in iced water before frying. US 2018/368451 discloses a method for preparing vegetable substrates prior to atmospheric frying involving exposure of the substrates to a pulsed electric field.

The described processes address those and other problems by providing methods to co-fry mixtures of tuber and vegetable substrates together in the same fryer at the same time using a continuous or a batch process. The described co-fry processes produce high quality snack blends/mixes of multi-substrates while eliminating product loss, breakage and process inefficiencies associated with conventional post-fry blending. Mixtures of two or more tuber or vegetable substrates made according to the described methods may be packaged in a single package to provide consumers with organoleptically pleasing shelf stable snack chips having a desired texture, flavor, as well as an acceptable moisture, oil, and acrylamide content.

### SUMMARY OF THE INVENTION

Aspects and embodiments of the present invention are set out in the appended claims.

### SUMMARY OF THE DISCLOSURE

Generally, the following description relates to methods for making ready-to-eat snack foods in the form that consumers typically identify as snack chips such as potato (vegetable) chips or kettle chips, as compared to French Fries or similarly shaped products. One of skill appreciates that French Fries are processed in a manner that differs from snack chips and that processes used to make French Fries are not used to make snack chips. As one example, potatoes for French Fries are typically cut to an average size of about 0.25 inches (6.35 mm) to about 0.375 inches (9.525 mm). In contrast, ready-to-eat snack chips when formed from tubers or vegetables are typically sliced or cut to an average thickness between about 0.040 inches (1.016 mm) to about 0.080 inches (2.032 mm).

Accordingly, the following disclosure relates to methods to co-fry, in a continuous or batch process, slices or cuts of a mixture of tuber and vegetable substrates in the same fryer, at the same time, and under the same conditions, to make vegetable and tuber snacks. Such mixtures may include two substrates or more than two substrates such as three, four, five, six, or more.

When the co-frying and thus, the resulting package mixture, includes two substrates, the mixture can range from about 5% to about 95% of a first substrate and from about 95% to about 5% of a second substrate. Within these ranges, the first substrate can be present in the package from about 5%, 10%, 15, 20%, 25%, 30%, 35%, 40%, 45%, 50%, 55%, 60%, 65%, 70%, 75%, 80%, 85%, 90%, or about 95% of the total mixture. Likewise, the second substrate can be present in the package from about 10%, 15% 20%, 25%, 30%, 35%, 40%, 45%, 50%, 55%, 60%, 65%, 70%, 75%, 80%, 85%, 90%, or about 95% of the total mixture.

Where three or more substrates are co-fried and packaged, each substrate may be present in an amount from about 5% to about 90% of the total mixture. For example, each substrate may be present in an amount from about 5%, 10%, 15%, 20%, 25%, 30%, 35%, 40%, 45%, 50%, 55%, 60%, 65%, 70%, 75%, 80%, 85%, or about 90% of the total mixture.

The tuber substrates that may be co-fried in the described methods, include, but are not limited to white, yellow, purple, and blue flesh potatoes, yams, and the like. The vegetable substrates that may be co-fried in the described methods include, but are not limited to, sweet potatoes, beets, carrots, radishes, pumpkin, plantains, cassava, yucca, taro root, arracacha, taro, parsnips, lotus root, mangarito, taioba, batata, and the like.

With the above in mind, in one embodiment, a mixture of a tuber and a vegetable are co-fried and may subsequently be packaged in a single package. In other embodiments, up to four substrates of vegetable and tuber slices/cuts are fed into the fryer at the same time for simultaneous frying to produce a finished product mix. The co-frying may be conducted in a continuous process or in a batch process, e.g., kettle type fryer.

An important feature of the described methods is the pre-treatment of the substrates prior to co-frying the substrates. In one embodiment, the whole vegetable or tuber and/or their raw slices/cuts are subjected to a pre-treatment process that may include one or more of blanching and a pulsed electric field treatment before they are fed into the fryer.

According to the described methods, the finished product moisture of individual substrates ranges from about 1.3% to about 4.5% or from about 1.5% to about 3.5%. In addition, the finished product oil content ranges from about 20% to about 50%, or from about 30% to about 50%, or from about 35% to about 45%. Further, the finished product mix exhibited an acrylamide content between about 100 ppb to about 600 ppb. In some instances, the acrylamide content is less than about 300 ppb. In the described methods, the acrylamide content is achieved without the use of enzymes such as asparagine-reducing enzymes including but not limited to asparaginase.

As noted above, the tuber and the one or more vegetables are pre-treated prior to co-frying. In some embodiments, the tuber is pre-treated in one manner and the vegetable or vegetables are pre-treated in another manner because vegetables typically contain a higher sugar (fructose, glucose, and sucrose) content than is present in, for example, tubers such as white potatoes.

The pre-treatment of tubers includes providing a feed stream of washed and peeled tubers to a slicer, where the tuber is sliced to an average thickness in the range of about 0.052 in (1.32 mm) to about 0.065 in (1.65 mm). The slices may be in the form of a flat or substantially uniform cut or may have a high amplitude corrugated shape.

Optionally, the slices are then directed to a flume where the slices may be washed with water to remove the starch present on the surface of the slices. When the slices are directed to a flume, the washed slices are then directed to a water removal station such as a vacuum suction apparatus to remove the water and to reduce the surface moisture of the slices.

Subsequently, the tubers are directed to the fryer, which can be a continuous type fryer or a batch type, e.g., kettle type fryer in a selected proportion with respect to the one or more vegetables.

The one or more vegetables may be pre-treated by providing a feed stream of whole unpeeled vegetables to an optional pulsed electric field (PEF) and thereafter to a slicer, where the vegetables are sliced to an average thickness that is typically thicker than the average thickness of the sliced white potato. To this end, the vegetables may be sliced to provide an average thickness in the range of about 0.058 (1.47 mm) to about 0.072 in (1.83 mm). The slices may be in the form of a flat or substantially uniform cut or may have a high amplitude corrugated shape.

The slice thickness of each of the tuber and the vegetables is selected depending on the type of co-frying, i.e., continuous or batch that the substrates will be subjected to. In addition, it has been found that the slice thickness of each of the tuber and the vegetable impacts the acrylamide content and moisture content of the blended mixture. When the tuber and vegetable or vegetables are to be co-fried in a continuous fryer, the tuber may have an average slice thickness in the range of about 0.052 in. (1.32 mm) to about 0.060 in (1.52 mm). or from about 0.054 in. (1.37 mm) to about 0.058 in. (1.47 mm) and the vegetable may have an average slice thickness in the range of about 0.056 in. (1.42 mm) to about 0.064 in. (1.63 mm) or about 0.058 in. (1.47 mm) to about 0.063 in. (1.60 mm). Alternatively, when the tuber and vegetable or vegetables are to be batch fried, the tuber may have an average slice thickness in the range of about 0.050 in. (1.27 mm) to about 0.067 in. (1.70 mm) or from about 0.052 in. (1.32 mm) to about 0.065 in. (1.65 mm) and the vegetable may have an average slice thickness in the range of about 0.066 in. (1.68 mm) to about 0.074 in. (1.88 mm) or about 0.068 in. (1.73 mm) to about 0.072 in. (1.83 mm)

After the vegetable or vegetables are sliced, they may be blanched, and then may optionally be quenched and drained prior to combining with the tuber for co-frying in a selected proportion of tuber to vegetable or vegetables.

When the co-frying is conducted as a continuous process, the fryer may be operated at a temperature in the range of about 300° F (149 °C) to about 350°F (176 °C), or from about 315° F (157 °C) to about 335°F (168 °C), or from about 320° F (160 °C) to about 330°F (166 °C) for a dwell time in the range from about 150 seconds to about 360 seconds or about 165 seconds to about 200 seconds. Under these conditions, the moisture content of the fried white potato and sweet potato is less than about 3%, or less than about 2.5%, or in the range of about 1% to about 3% or from about 2% to about 2.5%. Additionally, the acrylamide content is less than about 400 ppb, or less than about 300 ppb, or, in some instances less than about 200 ppb.

Further, the oil content of the tuber is between about 32% to about 38% or about 34% to about 36% and the oil content of the vegetable or vegetables are between about 49% to about 58%, or about 51% to about 46%. Accordingly, a mixture that contains about 60% tuber (specifically, white potato) and 40% vegetable (specifically, sweet potato) exhibits an overall oil content between about 38% to about 46% or about 40% to about 44%.

When the co-frying is conducted as a batch process, the fryer may be operated at a temperature in the range of about 300°F (149 °C) to about 350°F (176 °C), or from about 310°F (154 °C) to about 335°F (168 °C), or from about 315°F (157 °C) to about 330°F (166 °C) for a dwell time in the range from about 4 minutes to about 12 minutes or about 5 minutes to about 11 minutes. Under these conditions, the moisture content of each of the fried tuber and vegetable is less than about 3%, or less than about 2.5%. Additionally, the acrylamide content of the fried tuber is less than about 750 ppb, or less than about 600 ppb, or, in some instances less than about 450 ppb. The acrylamide content of the vegetable is less than about 550 ppb, or less than 400 ppb, or, in some instances less than 300 ppb

Further, the oil content of the tuber is between about 28% to about 38% or about 30% to about 34% and the oil content of the vegetable is between about 50% to about 60%, or about 52% to about 56%. Accordingly, a mixture that contains about 60% tuber (specifically, white potato) and 40% vegetable (specifically, sweet potato) exhibits an overall oil content between about 32% to about 38% or about 34% to about 36%.

The terms "co-fry", "co-fried" and other forms of both refer to the frying of two or more substrates in the same fryer, at the same time, and under the same conditions (e.g., oil temperature and dwell time).

All percentages used in the above and following description and claims are percent by weight unless specifically noted otherwise.

Other aspects and advantages of this invention will be appreciated from the following detailed description.

### BRIEF DESCRIPTION OF THE DRAWINGS

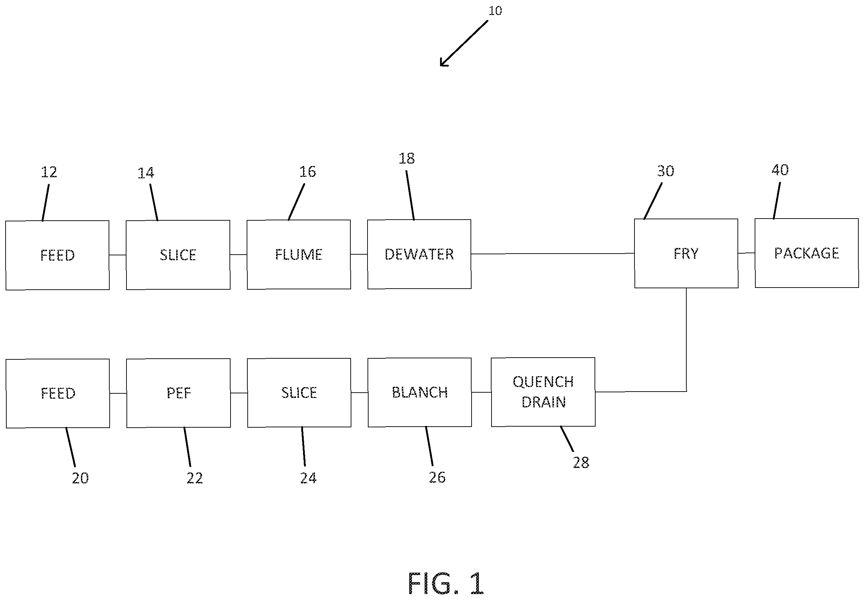

Fig. 1 is a schematic process diagram that shows one embodiment of the described method in which a tuber and a vegetable are subjected to different pre-treatment processes before co-frying the tuber and vegetable.

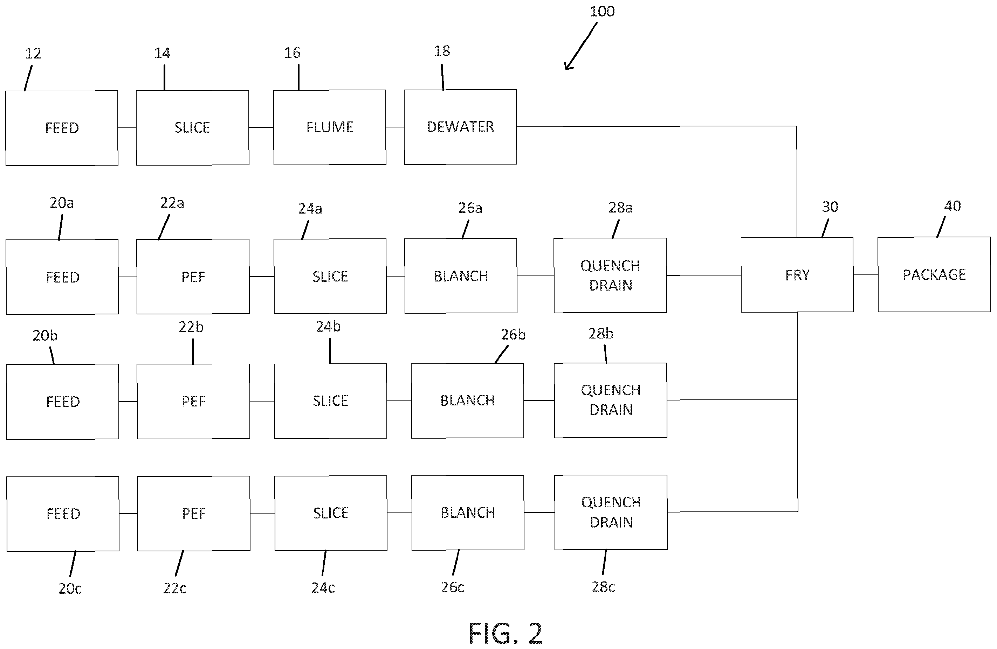

Fig. 2 is a schematic process diagram that shows one embodiment of the described method in which a tuber and three different vegetables are subjected to different pre-treatment processes before co-frying the tuber and the three vegetables.

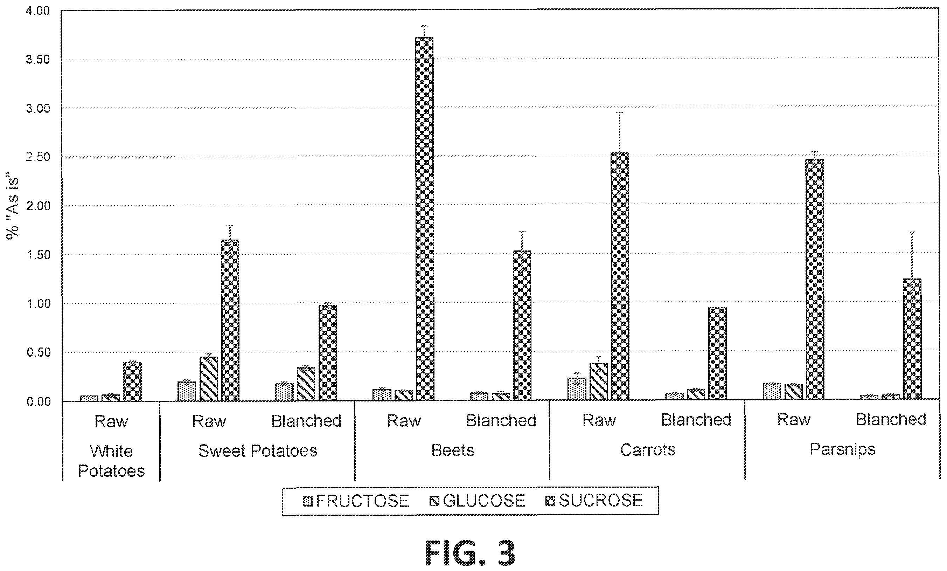

Fig. 3 shows the measured fructose, glucose, and sucrose content of raw white potatoes and raw and blanched sweet potatoes, beets, carrots, and parsnips.

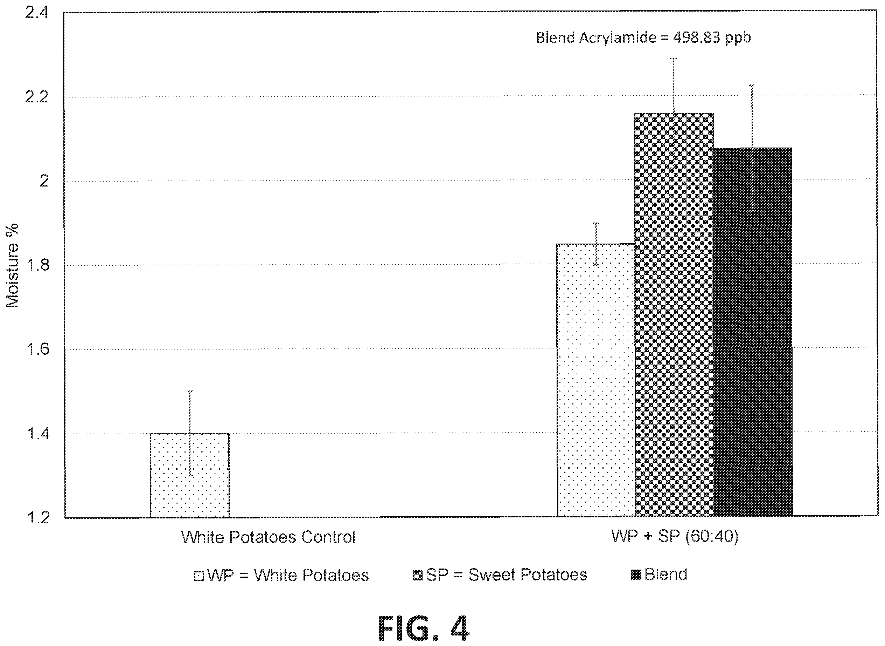

Fig. 4 shows the moisture content of white potatoes, sweet potatoes, and a mixture containing 60% white potatoes and 40% sweet potatoes where the white potatoes and sweet potatoes were pre-treated according to the described method and co-fried in a continuous oil fryer at a temperature of 325°F (162.8 °C) for 180 seconds. The white potatoes had an average thickness of about 0.054 in. (1.37 mm) and the sweet potatoes had an average thickness of about 0.065 in. (1.65 mm).

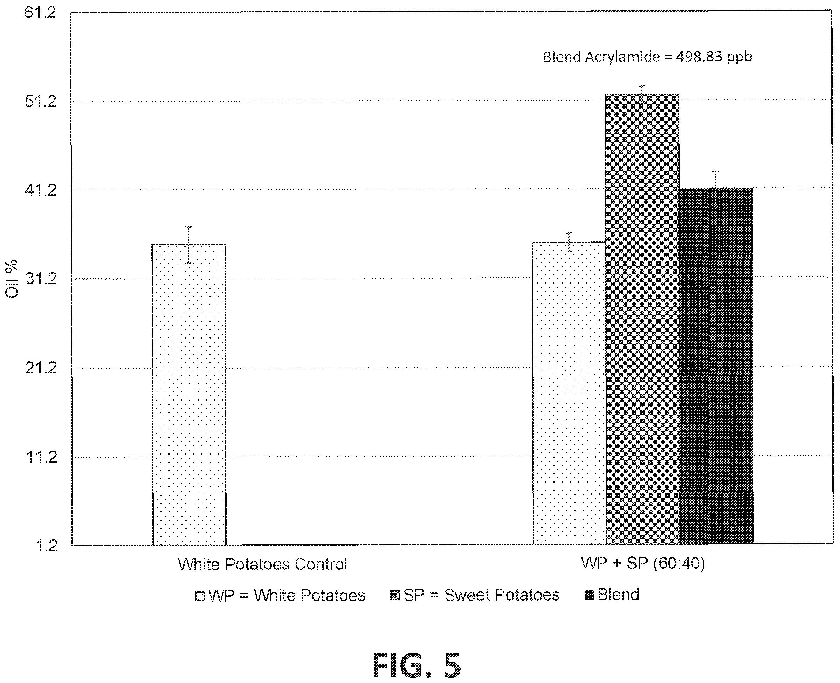

Fig. 5 shows the oil content of white potatoes, sweet potatoes, and a mixture containing 60% white potatoes and 40% sweet potatoes where the white potatoes and sweet potatoes were pre-treated according to the described method and co-fried in a continuous oil fryer at a temperature of 325°F (162.8 °C) for 180 seconds. The white potatoes had an average thickness of about 0.054 in. (1.37 mm) and the sweet potatoes had an average thickness of about 0.065 in. (1.65 mm)

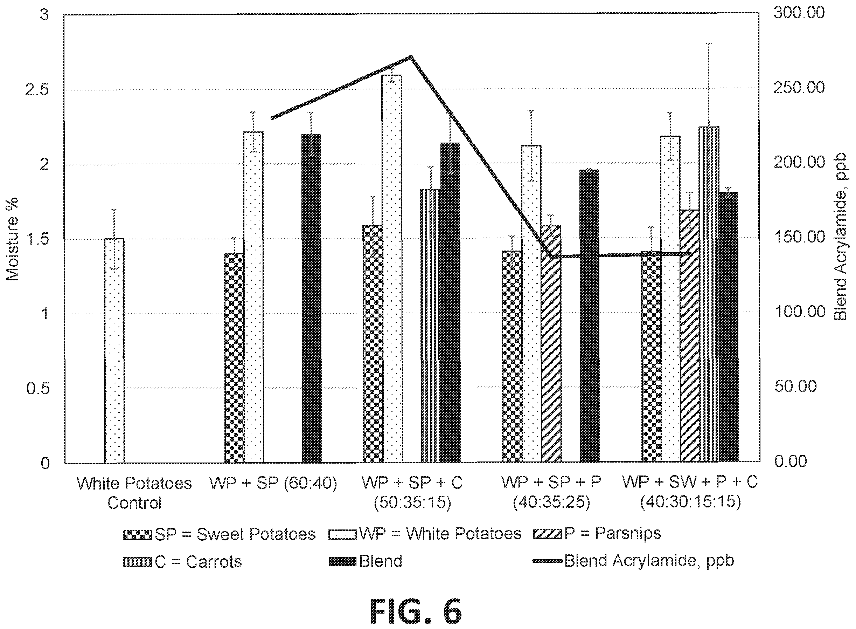

Fig. 6 shows the moisture content and acrylamide content of white potatoes, sweet potatoes, and various mixtures containing white potatoes, sweet potatoes, and other vegetables where the potatoes and vegetables were pre-treated according to the described method and co-fried in a batch kettle oil fryer at a temperature of 330° F (166 °C) for 7.5 minutes. The average thickness of the white potatoes was about 0.54 in.(1.37 mm) and the average thickness of the sweet potatoes and other vegetables was about 0.070 in. (1.78 mm).

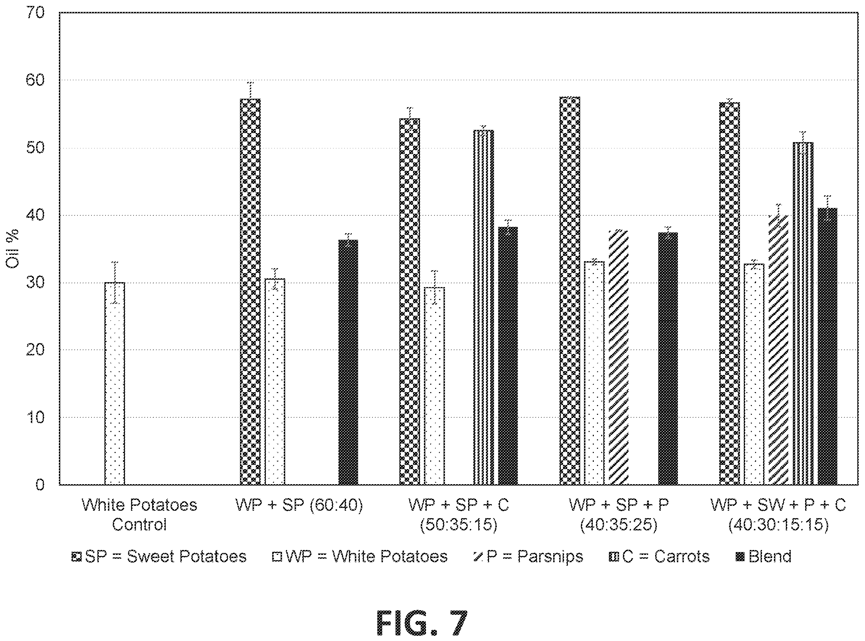

Fig. 7 shows the oil content and acrylamide content of white potatoes, sweet potatoes, and various mixtures containing white potatoes, sweet potatoes, and other vegetables where the potatoes and vegetables were pre-treated according to the described method and co-fried in a batch kettle oil fryer at a temperature of 330° F (166 °C) for 7.5 minutes. The average thickness of the white potatoes was about 0.54 in. (1.37 mm) and the average thickness of the sweet potatoes and other vegetables was about 0.070 in.(1.78 mm)

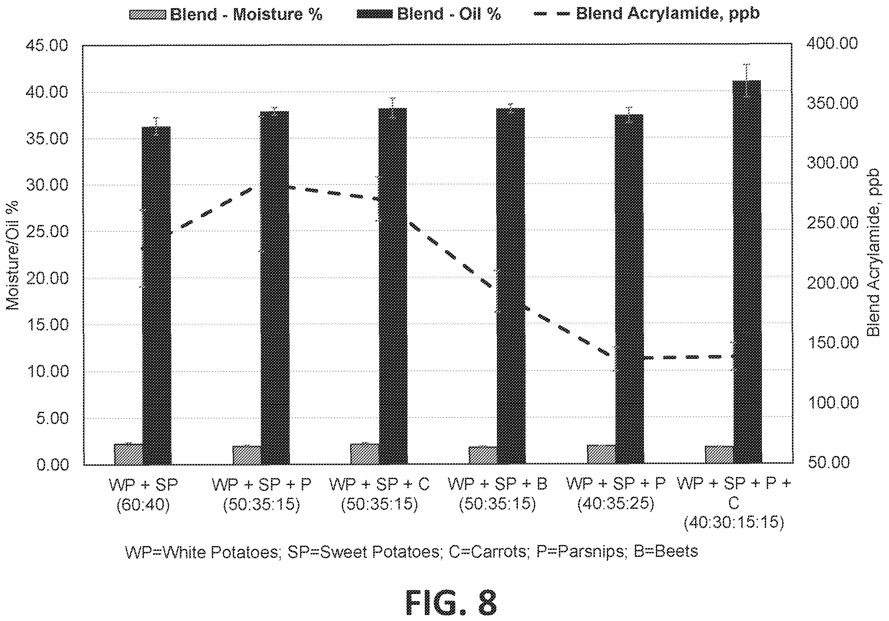

Fig. 8 shows the moisture, oil, and acrylamide content of white potatoes, sweet potatoes, and various mixtures containing white potatoes, sweet potatoes, and other vegetables where the potatoes and vegetables were pre-treated according to the described method and co-fried in a batch kettle oil fryer at a temperature of 330° F (166 °C) for 7.5 minutes. The average thickness of the white potatoes was about 0.54 in. (1.37 mm) and the average thickness of the sweet potatoes and other vegetables was about 0.070 in. (1.78 mm)

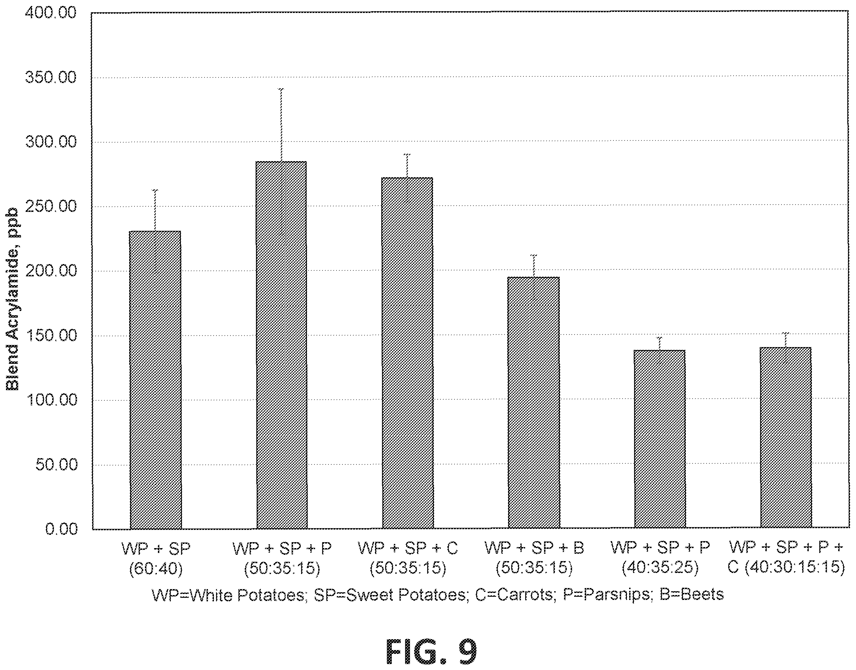

Fig. 9 shows the acrylamide content of white potatoes, sweet potatoes, and various mixtures containing white potatoes, sweet potatoes, and other vegetables where the potatoes and vegetables were pre-treated according to the described method and co-fried in a batch kettle oil fryer at a temperature of 330° F (166 °C) for 7.5 minutes. The average thickness of the white potatoes was about 0.54 in. (1.37 mm) and the average thickness of the sweet potatoes and other vegetables was about 0.070 in.(1.78 mm)

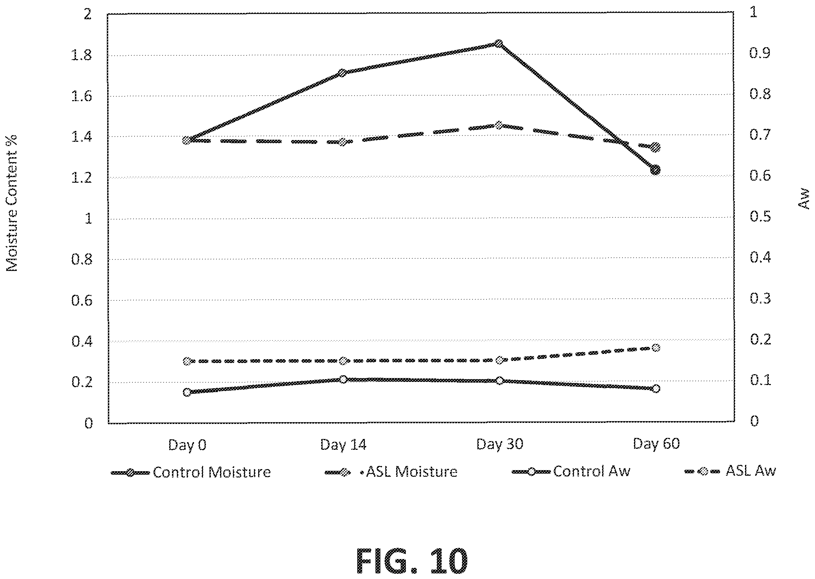

Fig. 10 shows the moisture content and water activity of a mixture containing 60% white potatoes and 40% sweet potatoes pre-treated according to the described method and co-fried in a batch kettle oil fryer, packaged in a bag, and stored for 60 days at 85°F and a relative humidity equal to or greater than 30%.

Other aspects and advantages of this invention will be appreciated from the following detailed description.

### DETAILED DESCRIPTION OF THE INVENTION

As noted above, the previously known method to produce a package containing a mixture of a tuber and one or more vegetables requires the separate and individual frying of each of the substrates (i.e., tuber and vegetables) and then combining individual substrates in a package in a post-frying process. In other words, the tubers are processed, fried, and directed to a packaging station. Separately, the vegetables processed, fried, and directed to a packaging station. At the packaging station, the separately fried tubers and vegetables are mixed in desired ratio and filled in a bag/package. As noted above, there are several problems with this process. To solve the problems with the post-frying packaging processes, the described method provides processes to co-fry the substrates together at the same time and under the same conditions.

Those skilled in the art appreciate that some vegetables are often difficult to subject to frying processes in the production of shelf stable snack foods. For example, some vegetables contain relatively high amounts of reducing sugars, sucrose, starch, and/or solids, particularly when compared to white potatoes, and may be difficult to fry to a shelf stable moisture content without significant burning. For example, Fig. 3 shows the measured sugar (fructose, glucose, and sucrose) content of raw white potatoes as well as the measured sugar content of raw and blanched sweet potatoes, beets, carrots, and parsnips. It is evident that the total sugar content, and particularly the sucrose content, of the vegetables is significantly greater than that of white potatoes. As a result, one of skill will appreciate that optimal frying conditions for white potatoes will likely be less than optimal for vegetables.

The described methods address these issues by describing methods to co-fry, in a continuous or batch process, slices or cuts of a mixture of tuber and vegetable substrates in the same fryer, at the same time, and under the same conditions, to make vegetable/tuber mix snacks and to make packages containing a mixture of tuber and vegetable substrates within the same package. Such mixtures may include two substrates or more than two substrates such as three, four, five, six, or more.

When the co-frying and thus, the resulting package mixture, includes two substrates, the mixture can range from about 5% to about 95% of a first substrate and from about 95% to about 5% of a second substrate. Within these ranges, the first substrate can be present in the package from about 5%, 10%, 15, 20%, 25%, 30%, 35%, 40%, 45%, 50%, 55%, 60%, 65%, 70%, 75%, 80%, 85%, 90%, or about 95% of the total mixture. Likewise, the second substrate can be present in the package from about 10%, 15% 20%, 25%, 30%, 35%, 40%, 45%, 50%, 55%, 60%, 65%, 70%, 75%, 80%, 85%, 90%, or about 95% of the total mixture.

Where three or more substrates are co-fried and packaged, each substrate may be present in an amount from about 5% to about 90% of the total mixture. For example, each substrate may be present in an amount from about 5%, 10%, 15%, 20%, 25%, 30%, 35%, 40%, 45%, 50%, 55%, 60%, 65%, 70%, 75%, 80%, 85%, or about 90% of the total mixture.

The tuber substrates that may be co-fried in the described methods, include, but are not limited to white, yellow, purple, and blue flesh potatoes, yams, and the like. The vegetable substrates that may be co-fried in the described methods include, but are not limited to, sweet potatoes, beets, carrots, radishes, pumpkin, plantains, cassava, yucca, taro root, arracacha, taro, parsnips, lotus root, mangarito, taioba, batata, and the like.

Turning now to Fig. 1, one embodiment of the process 10 for co-frying a tuber and a vegetable substrate is shown. In this embodiment, a single tuber and a single vegetable are co-fried. As already noted, it is contemplated that more than a single tuber may be co-fried with one or more than one vegetable. Certain of those embodiments will be described later. According to the method shown in Fig. 1 and with the difference in solids and sugar content, between, for example, tubers and vegetables in mind, the pre-treatment processing of tubers differs from the pre-treatment processing of vegetables. Each will now be described.

### PRE-TREATMENT PROCESSING OF TUBER

Tubers (e.g. white potatoes) are provided to a feed step 12 that may include washing the whole raw tuber to remove any dirt or foreign objects that may have attached to the produce. Suitable washing solutions comprise, for example, water at room temperature or a freshwater solution comprising an anti-foaming agent. In certain embodiments, the washing solution is free of salts. In some embodiments, the washing solution consists of water. Such step may not always be necessary. The tubers may be optionally sized after washing. In some embodiments, the tubers may be peeled and in others, the tubers may remain unpeeled having its peel, rind, skin, and inside cellular material or flesh intact.

Thereafter, the tubers are sliced 14. The tubers are sliced to a desired thickness in a range between about 0.058 in. (1.47 mm) to about 0.072 in. (1.83 mm) The desired thickness depends, in part, on whether the co-frying process will be conducted using a continuous process or a batch process. For example, when the co-frying process will be conducted in a continuous process, the tuber may be sliced to provide an average slice thickness in the range of about 0.052 in. (1.32 mm) to about 0.060 in. (1.52 mm) or from about 0.054 in.(1.37 mm) to about 0.058 in.(1.47 mm). Alternatively, when the co-frying process will be conducted in a batch process, the tuber may be sliced to provide an average slice thickness in the range of about 0.050 in. (1.27 mm) to about 0.067 in. (1.7 mm) or from about 0.052 in. (1.32 mm) to about 0.065 in. (1.65 mm).

After slicing, the sliced tubers may optionally be directed to a flume 16, in which water may be used to wash the surface starch from the slices and to separate slices that may have been joined with other slices. Thereafter, the separate washed slices are subjected to a dewatering process 18 in which the water and internal moisture of the tuber is reduced. A suitable dewatering process may include a vacuum suction process.

Thereafter, a pre-selected amount of the pre-treated tubers are combined with a preselected amount of pre-treated vegetable to provide a mixture containing relative amounts as noted above (e.g., 60% white potatoes and 40% sweet potatoes) and directed to a fryer 30 to be co-fried with the pre-treated vegetables. The pre-treatment of the vegetables is described next.

### PRE-TREATMENT PROCESSING OF VEGETABLES

The vegetable is provided to a feed step 20 that may include washing the whole raw vegetable to remove any dirt or foreign objects that may have attached to the produce. Suitable washing solutions comprise, for example, water at room temperature or a freshwater solution comprising an anti-foaming agent. In certain embodiments, the washing solution is free of salts. In some embodiments, the washing solution consists of water. Such a step may not always be necessary. The vegetable may be optionally sized after washing. In some embodiments, the vegetable may be peeled and in others, the vegetable may remain unpeeled having its peel, rind, skin, and inside cellular material or flesh intact.

In one embodiment, the vegetable, after being washed as described above, may optionally be subjected to a pulsed electric field (PEF) 22. The pulsed electric field results in electroporation that may enable the extraction of intracellular substances from the cells of the raw vegetable. The PEF treatment chamber may be arranged to receive the vegetable in solid phase, with a liquid transport carrier, past at least two electrodes, where the pulse generator is arranged to apply a PEF to a treatment space between the electrodes. In one embodiment, the process is continuous and raw whole vegetables are conveyed on a conveyor belt system to and through the PEF equipment, where the treatment space receiving the PEF is across a portion of a conveyor belt submerged in the liquid transport carrier. As an example, a 30-kV unit may be used at a repetition rate of 300 Hz at 12 feet/minute (3.66m/min).

The applied electric field may be a pulsed electric field in the form of rectangular or (exponential) mono polar (bipolar) pulses. As an example, the whole raw vegetable may be subjected to an electric field strength of at least about 0.8 kV/cm or between about 0.8 to about 3.0 kV/cm, or in a range from about 1.1 to about 2.0 kV/cm, or from about 1.5 to about 2.2 kV/cm. The number of pulses applied may vary and may be about 1,000 pulses per second are applied or, in some instances, may be between about 70 to about 80.

Further details of a PEF apparatus and conditions for applying a PEF since such are known and can be ascertained at least from US Patent Publication US2019/0116854.

Following application of the pulsed electric field, the whole raw vegetables are then sliced 24. In one embodiment, the whole raw vegetables are sliced into slices having an average thickness that is typically larger than the average thickness of the tuber. In some instances, the vegetables are sliced to an average thickness in the range of about 0.058 to about 0.072 in. (about 1.47 to about 1.83 mm). The slices may be in the form of a flat or substantially uniform cut or may have a high amplitude corrugated shape.

The desired thickness depends, in part, on whether the co-frying process will be conducted using a continuous process or a batch process. For example, when the co-frying process will be conducted in a continuous process, the vegetables may have an average slice thickness in the range of about 0.056 in. (1.42 mm) to about 0.064 in. (1.63 mm) or about 0.058 in. (1.47) to about 0.063 in. (1.6 mm). Alternatively, when the co-frying process will be conducted in a batch process, the vegetables may have an average slice thickness in the range of about 0.066 in. (1.67 mm) to about 0.074 in. (1.88 mm) or about 0.068 in. (1.73 mm) to about 0.072 in. (1.83 mm).

After slicing and, in some instances immediately after slicing (i.e., without any intervening step following slicing), the sliced vegetables are subjected to a blanching step 26. In one embodiment, blanching is performed at temperatures greater than about 145° F (63 °C) for less than about 6 minutes. In one embodiment, blanching is performed at temperatures greater than about 160° F (71 °C), or greater than about 180° F (82 °C). In other embodiments, blanching is performed at a temperature in a range from about 160° F (71° C). to about 175° F (79 °C). In one embodiment, blanching is performed for between about 2 to about 5.5 minutes. In one embodiment, blanching is performed at a temperature between about 145° F (63 °C). to about 195° F (91 °C). for between about 1 to about 6 minutes. In one embodiment, blanching is performed at between about 160° F (71 °C). to about 180° F (82 °C). for between about 3 to about 4 minutes. Dense vegetables comprising higher amounts of starch may require longer blanching times.

The blanching may be conducted in a turbulent environment comprising continuous agitation with water and air injection and, in some instances free of mechanical agitation. In other embodiments, the blancher selected may be conducted using a rotary blancher with a substantially sealed housing and a water supply for injecting water or steam into the blancher to heat the blancher and maintain the temperature at the set point temperature. As noted above, the blanching may be conducted in a turbulent environment, i.e., an environment configured to keep slices separated during blanching. Slice agitation may be performed, for example, using a screw (e.g., auger) within a water chamber comprising a water recirculation rate configured to recirculate water to keep slices separated.

In one embodiment, it is contemplated to use a rotary drum blancher that may include a screw to create a turbulent environment with continuous agitation of the slices. A suitable blancher may have a design throughput of between about 400 lbs./hr (181 Kg/hr) and about 1800 lbs./hr (816.5 Kg/hr). The slices may be separated into eight flights within the blancher such that the mass per flight is between about 1.3 lbs. (0.6 Kg) and about 14.1 lbs. (6.4 Kg). The blanching step for each flight may be performed at between 160° F (71.1 °C). and 175° F (79.4 °C). for between about 1 and about 2 minutes or for about 1.5 minutes, or for a duration of between 1.5 minutes and 3 minutes. The combination of the number of flights, temperature, blanching time, and throughput of the blancher creates a turbulent water solution with increased and continuous agitation of the slices during the blanching step.

After the blanching step 26 that has been performed at the indicated temperature and time, the slices may be subjected to an optional quenching and draining step 28. The quenching and draining step 28 seeks to remove water that may improve frying efficiency.

Thereafter, a pre-selected amount of the pre-treated vegetables are combined with a preselected amount of pre-treated tubers to provide a mixture containing desired relative amounts as noted above (e.g., 60% white potatoes and 40% sweet potatoes) and directed to a fryer 30 to be co-fried. The combining may be conducted just prior to the fryer or within the fryer. As noted above, the co-frying may be conducted in a continuous process or a batch process.

### CONTINUOUS Co-FRY PROCESS

The continuous co-frying step 30 may be conducted in an atmospheric oil fryer at a temperature in the range of about 300° F (149 °C) to about 350°F (177 °C), or from about 315° F (157 °C) to about 335°F (168 °C), or from about 320° F (160 °C) to about 330°F (166 °C) for a dwell time in the range from about 150 seconds to about 360 seconds or about 165 seconds to about 200 seconds.

Fig. 4 is a graphical representation, for example, of the comparative moisture content of white potatoes, sweet potatoes, and a blend of 60% white potatoes and 40% sweet potatoes after co-frying in a continuous atmospheric fryer under the conditions noted above. It is noted that the moisture content of commercially available white potato chips, used as a control, is between about 1.2% to about 1.6% or about 1.4%. In comparison, the individual moisture content of the fried tuber and vegetable co-fried under the above conditions is less than about 3%, or less than about 2.5%, or in the range of about 1% to about 3% or from about 1.5% to about 2.5%. It is also noted that the blend exhibited an acrylamide content of about 500 ppb (498.83 ppb).

It will be appreciated that the overall moisture content of the blend will depend on the relative amounts of the tuber and vegetable. In this regard, Fig. 4 shows that a blend of 60% white potatoes and 40% sweet potatoes exhibits a moisture content of about 2%, which is greater than the individual moisture content of the white potatoes and less than the individual moisture content of the sweet potatoes.

Further, the oil content of the tuber is between about 32% to about 38% or about 34% to about 36% and the oil content of the vegetable is between about 49% to about 58%, or about 51% to about 46%. Accordingly, a mixture that contains about 60% tuber and 40% vegetable exhibits an overall oil content between about 38% to about 46% or about 40% to about 44%. It is noted that the oil content of commercially available white potato chips, used as a control, is between about 30% to about 40% or about 35%.

Fig. 5 is a graphical representation, for example, of the comparative oil content of commercially available white potato chips, used as a control, co-fried white potatoes, sweet potatoes, and a blend of 60% white potatoes and 40% sweet potatoes after co-frying in a continuous atmospheric fryer under the conditions noted above.

### BATCH Co-FRY PROCESS

Typically, a batch-fry process produces "kettle-style" snacks having the known hard-bite texture associated with kettle-style chips. In a batch-fry process, the desired mixture of tubers and vegetables are fed into a kettle of hot oil that may typically have a mechanical stirrer to distribute the oil, tubers, and vegetables throughout the kettle.

The batch oil fryer may be operated at a temperature in the range of about 300° F (149 °C) to about 350° F (176 °C), or from about 310° F (154 °C) to about 335° F (168 °C), or from about 315° F (157 °C) to about 330° F (166 °C) for a dwell time in the range from about 4 minutes to about 12 minutes or about 5 minutes seconds to about 11 minutes. Under these conditions, the moisture content of each of the individual fried tuber and vegetable is less than about 3%, or less than about 2.5% or in the range from about 1.2% to about 2.4%.

Fig. 6 is a graphical representation, for example, of the comparative moisture content of a commercially available white potato chips, used as a control, co-fried white potatoes, sweet potatoes, and a blend of 60% white potatoes and 40% sweet potatoes after co-frying in a batch fryer under the conditions noted above. In this instance, the blend exhibited a moisture content in the range of about 1.8% to about 2.4% or about 1.9% to about 2.3% or about 2.2%.

Further, the oil content of the tuber is between about 28% to about 38% or about 30% to about 34% and the oil content of the vegetable is between about 50% to about 60%, or about 52% to about 56%. Accordingly, a mixture that contains about 60% tuber and 40% vegetable exhibits an overall oil content between about 32% to about 38% or about 34% to about 36%. Fig. 7 is a graphical representation, for example, of the comparative oil and acrylamide content of a control sample of a commercially available white potato chip, co-fried white potatoes, sweet potatoes, and a blend of 60% white potatoes and 40% sweet potatoes after co-frying in a batch oil fryer under the conditions noted above.

The acrylamide content of the fried tuber is less than about 750 ppb, or less than about 600 ppb, or, in some instances less than about 450 ppb. The acrylamide content of the vegetable is less than about 550 ppb, or less than 400 ppb, or, in some instances less than 300 ppb.

Fig. 6 shows the acrylamide content of various blends. It will be appreciated that the co-fried blends exhibited an acrylamide content of less than 300 ppb and ranged from about 100 ppb to about 300 ppb. In some instances, where the co-fried blend included a tuber and two or three vegetables, the co-fried blend exhibited an acrylamide content between about 120 ppb to about 150 ppb or between about 130 ppb to about 140 ppb. In other instances, where the co-fried blend included a tuber and two vegetables, the co-fried blend exhibited an acrylamide content between about 250 ppb to about 300 ppb or between about 260 ppb to about 280 ppb. In other instances where the co-fried blend included a tuber and a single vegetable, the co-fried blend exhibited an acrylamide content between about 200 ppb to about 250 ppb or between about 220 ppb to about 240 ppb.

### PACKAGING

After the co-frying step, whether as a continuous process or a batch process, the mixture of tubers and vegetables are directed to a packaging step where the pre-selected co-fried mixture is packaged into individual packages.

Referring to Fig. 10, a 60-day accelerated shelf stability test was conducted with a package of batch co-fried mixture blend containing 60% white potatoes and 40% sweet potatoes. The test was conducted at 85°F (29 °C) and a relative humidity equal to or greater than 30%. The mixture blend was compared to a control sample of a commercially available white potato chip. It can be seen that both the control sample and the mixture blend had an initial moisture content of about 1.4% and that over time, the moisture content increased for both at about 30 days and then decreased so that at 60 days, the mixture had a moisture content of about 1.34% and the control had a moisture content of 1.23%.

In addition, the water activity (Aw) of the control and the mixture was also measured. It can be seen that initially, the water activity of the control and the water activity of the mixture was about 0.15. After 60 days, the water activity of the control was slightly greater at about 0.15 and the water activity of the mixture was about 0.18. Over the 60-day period of conducting the accelerated shelf-life study, water activity of the mixture stayed well below 0.4 recommended for commercial microbial safety of ready to eat snacks. 60 days of accelerated shelf-life conditions described earlier is equivalent to 2-3 times the time under typical room temperature and storage conditions. The shelf stability test demonstrated that the co-fried mixture exhibited commercially acceptable shelf stability.

Further, a sensory panel evaluated organoleptic properties of the mixture at the beginning of the shelf stability test and at the completion. The sensory panel could not discriminate (X-test) between the initial samples and those after the completion of the accelerated shelf-life study.

Turning now to Fig. 2, another embodiment of the described method is shown. In this method, a process 100 a tuber substrate is co-fried with three vegetable substrates. In this embodiment, it will be appreciated that while only a single tuber substrate is described, it is contemplated that more than one type of tuber substrate may be pre-treated in the same manner as the described tuber substrate. Further the other tuber substrates, where appropriate, may be pre-treated together with the described tuber substrate (i.e., at the same time, under the same conditions, and using the same equipment). Alternatively, the other tuber substrates may be pre-treated in a separate pre-treatment manner (not shown) that is the same as or similar to the described tuber substrate.

Accordingly, as with the method shown in Fig. 1, the tuber substrate is provided in a feed step 12, directed to a slicer 14, and then optionally to a flume 16 and dewatering step 18, prior to mixing the desired and pre-selected amount of the pre-treated tuber substrate with the desired and pre-selected amount of each of the pre-treated vegetables. The pre-treatment of the tuber substrate or more than one type of tuber substrate may be under the same conditions described above with respect to Fig. 1.

Similarly, three different vegetable substrates, e.g., sweet potatoes, carrots, and parsnips may be individually provided to a feed step, 20a, 20b, 20c, respectively. It will be appreciated that the embodiment described with respect to Fig 2 shows a separate pre-treatment line (sub-process) for each type of vegetable. However, one of skill will appreciate and it is contemplated that each type of vegetable may be subjected to a single pre-treatment process in which each type of vegetable is either processed using the same equipment at different times, i.e., sequentially, or at the same time. In any event, each of the differing vegetable substrates are processed in a similar manner and under the conditions described above with respect to Fig. 1. Accordingly, each of the differing vegetables may be sequentially subjected to an optional PEF step 22a, 22b, 22c, followed by slicing 24a, 24b, 24c, blanching 26a, 26b, 26c, and an optional quenching and draining step 28a, 28b, 28c prior to mixing the desired and pre-selected amount of the pre-treated vegetable substrates with the desired and pre-selected amount of each of the pre-treated tubers.

Referring back to Figs. 6 and 7, which respectively provide a graphical representation, for example, of the comparative moisture content and acrylamide content and of the comparative oil content and acrylamide content of a control sample of a commercially available white potato chip and mixtures of batch co-fried tuber and vegetables, as described above with respect to Figs. 1 and 2. In particular, Fig. 6 shows the moisture content and acrylamide content of a control sample of a commercially available white potato chip, and co-fried white potatoes, sweet potatoes, and various mixtures containing white potatoes, sweet potatoes, parsnips, and carrots where the potatoes and vegetables were made according to the methods described with respect to Figs. 1 and 2 and co-fried in a batch kettle oil fryer at a temperature of 330° F (166 °C) for 7.5 minutes. The average thickness of the white potatoes was about 0.54 in (13.72 mm). and the average thickness of the sweet potatoes and other vegetables was about 0.070 in (1.78 mm).

Regarding Fig. 7, it shows the oil content and acrylamide content of a control sample of a commercially available white potato chip, co-fried white potatoes, sweet potatoes, and various mixtures containing white potatoes, sweet potatoes, parsnips and carrots where the potatoes and vegetables were made according to the methods described with respect to Figs. 1 and 2 and co-fried in a batch kettle oil fryer at a temperature of 330° F (166 °C) for 7.5 minutes. The average thickness of the white potatoes was about 0.54 in. (13.72 mm) and the average thickness of the sweet potatoes and other vegetables was about 0.070 in (1.78 mm).

The produced mixture of a co-fried tuber and vegetables can be packaged in individual packages to provide a desired and pre-selected amounts of tubers and a desired and pre-selected amounts of vegetables. For example, where white potatoes are co-fried with sweet potatoes, parsnips, and carrots, each may be present in the following ratio; 40:30;15:15 (white potatoes, sweet potatoes, parsnips, carrots). Alternatively, where only two vegetable substrates are co-fried with a tuber, each may be in present in the following ratio; 50:35:15 (white potatoes, sweet potatoes, carrots) or 40:35:25 (white potatoes, sweet potatoes, parsnips).

Figure 8 shows the moisture content, oil content, and acrylamide content of blends of co-fried tubers and one or more vegetables pre-treated and co-fried according to the methods described with respect to Figs. 1 and 2. Figure 9 shows the acrylamide content of blends of co-fried tubers and one or more vegetables as shown in Figure 8.

In general, a packaged ready-to-eat snack food product containing a mixture of co-fried tuber substrates and vegetable substrates is described The packaged ready-to-eat snack food product includes from about 5% to about 95% of the tuber substrates; and from about 5% to about 95% of the vegetable substrates such that the mixture in the packaged product has a moisture content in the range of about 1.3% to about 4.5% or an oil content in the range of about 20% to about 50%.

## Claims

1. A method for preparing a mixture of vegetable and tuber substrates comprising:
a. pre-treating the tuber substrates by slicing the tuber substrates to an average thickness between about 1.016 mm (0.040 inch) to about 2.032 mm (0.080 inch),
b. pre-treating each raw vegetable substrate forming the mixture by:
i. optionally subjecting each raw vegetable substrate to a pulsed electric field,
ii. slicing the raw vegetable substrates to an average thickness between about 1.016 mm (0.040 inch) to about 2.032 mm (0.080 inch),
iii. blanching the sliced raw vegetable substrates, and
iv. optionally quenching and draining the blanched sliced raw vegetable substrates to form pre-treated vegetable substrates
c. mixing the pre-treated tuber and vegetable substrates; and
d. co-frying the mixed pre-treated vegetable substrates or the mixed pre-treated vegetable and tuber substrates together at the same time and under the same conditions.

2. The method according to claim 1 wherein the raw vegetable substrates are selected from the group consisting of sweet potatoes, beets, carrots, radishes, pumpkin, plantains, cassava, yucca, taro root, arracacha, taro, parsnips, lotus root, mangarito, taioba, batata, and mixtures thereof.

3. The method according to claim 1 or 2 wherein the raw vegetable substrate comprises sweet potato and the tuber substrates comprise white potato substrates.

4. The method according to any claim 1-3 comprising two or more vegetable substrates .

5. The method according to any claim 1-4 wherein the co-frying is conducted as a continuous process or a batch process.

6. The method of any claim 1-5 further comprising packaging the co-fried mixture of vegetable and tuber substrates, wherein the vegetable substrate is present in an amount from about 5% to about 95% and the tuber substrate is present in an amount from about 5% to about 95%.

## Patentansprüche

1. Verfahren zur Herstellung einer Mischung aus Gemüse- und Knollensubstraten, umfassend:
a. das Vorbehandeln der Knollensubstrate durch Schneiden der Knollensubstrate in Scheiben mit einer mittleren Dicke zwischen etwa 1,016 mm (0,040 Zoll) und etwa 2,032 mm (0,080 Zoll),
b. das Vorbehandeln jedes rohen Gemüsesubstrats, das die Mischung bildet, durch:
i. gegebenenfalls Unterziehen jedes rohen Gemüsesubstrats einem gepulsten elektrischen Feld,
ii. Schneiden der rohen Gemüsesubstrate in Scheiben mit einer mittleren Dicke zwischen etwa 1,016 mm (0,040 Zoll) und etwa 2,032 mm (0,080 Zoll),
iii. Blanchieren der in Scheiben geschnittenen rohen Gemüsesubstrate, und
iv. gegebenenfalls Abschrecken und Abtropfen der blanchierten, in Scheiben geschnittenen rohen Gemüsesubstrate, um vorbehandelte Gemüsesubstrate zu bilden,
c. Mischen der vorbehandelten Knollen- und Gemüsesubstrate; und
d. gemeinsames Frittieren der gemischten vorbehandelten Gemüsesubstrate oder der gemischten vorbehandelten Gemüse- und Knollensubstrate zusammen zur gleichen Zeit und unter den gleichen Bedingungen.

2. Verfahren nach Anspruch 1, wobei die rohen Gemüsesubstrate ausgewählt sind aus der Gruppe bestehend aus Süßkartoffeln, Rüben, Karotten, Radieschen, Kürbis, Kochbananen, Maniok, Yucca, Taro-Wurzel, Arracacha, Taro, Pastinaken, Lotoswurzel, Mangarito, Taioba, Batata und Mischungen davon.

3. Verfahren nach Anspruch 1 oder 2, wobei das rohe Gemüsesubstrat Süßkartoffel umfasst und die Knollensubstrate Substrate aus weißen Kartoffeln umfassen.

4. Verfahren nach einem der Ansprüche 1 bis 3, umfassend zwei oder mehr Gemüsesubstrate.

5. Verfahren nach einem der Ansprüche 1 bis 4, wobei das gemeinsame Frittieren als kontinuierlicher Prozess oder als Chargenprozess durchgeführt wird.

6. Verfahren nach einem der Ansprüche 1 bis 5, ferner umfassend das Verpacken der gemeinsam frittierten Mischung aus Gemüse- und Knollensubstraten, wobei das Gemüsesubstrat in einer Menge von etwa 5 % bis etwa 95 % vorhanden ist und das Knollensubstrat in einer Menge von etwa 5 % bis etwa 95 % vorhanden ist.

## Revendications

1. Procédé de préparation d'un mélange de substrats de légumes et de tubercules comprenant :
a. le prétraitement des substrats de tubercules par découpe en tranches des substrats de tubercules à une épaisseur moyenne comprise entre environ 1,016 mm (0,040 pouce) et environ 2,032 mm (0,080 pouce),
b. le prétraitement de chaque substrat de légume cru formant le mélange par :
i. l'application facultative à chaque substrat de légume cru d'un champ électrique pulsé,
ii. la découpe en tranches des substrats de légumes crus à une épaisseur moyenne comprise entre environ 1,016 mm (0,040 pouce) et environ 2,032 mm (0,080 pouce),
iii. le blanchiment des substrats de légumes crus découpés en tranches, et
iv. la trempe et l'égouttage facultatifs des substrats de légumes crus découpés en tranches et blanchis pour former des substrats de légumes prétraités
c. le mélange des substrats de tubercules et de légumes prétraités ; et
d. la co-friture des substrats de légumes prétraités mélangés ou des substrats de légumes et de tubercules prétraités mélangés ensemble en même temps et dans les mêmes conditions.

2. Procédé selon la revendication 1, dans lequel les substrats de légumes crus sont choisis dans le groupe constitué par les patates douces, les betteraves, les carottes, les radis, les potirons, les plantains, le manioc, le yucca, la racine de taro, l'arracacha, le taro, les panais, la racine de lotus, le mangarito, le taioba, la batata, et leurs mélanges.

3. Procédé selon la revendication 1 ou 2, dans lequel le substrat de légume cru comprend de la patate douce et les substrats de tubercules comprennent des substrats de pomme de terre blanche.

4. Procédé selon l'une quelconque des revendications 1 à 3, comprenant deux ou plusieurs substrats de légumes.

5. Procédé selon l'une quelconque des revendications 1 à 4, dans lequel la co-friture est réalisée sous la forme d'un procédé continu ou d'un procédé discontinu.

6. Procédé selon l'une quelconque des revendications 1 à 5, comprenant en outre l'emballage du mélange co-frit de substrats de légumes et de tubercules, dans lequel le substrat de légume est présent en une quantité d'environ 5 % à environ 95 % et le substrat de tubercule est présent en une quantité d'environ 5 % à environ 95 %.
